# EUROPÄISCHE PATENTSCHRIFT

(11) **EP 1 169 796 B1**
(45) Veröffentlichungstag und Bekanntmachung des Hinweises auf die Patenterteilung: **16.03.2005**
(21) Anmeldenummer: 00940137.3
(22) Anmeldetag: 19.04.2000
(51) Int. Cl.: H04B 7/26, H04L 27/227

(54) **KORREKTUR VON FREQUENZFEHLERN IN TEILNEHMERSTATIONEN**
CORRECTION OF FREQUENCY ERRORS IN SUBSCRIBER STATIONS
CORRECTION D'ERREURS DE FREQUENCE DANS DES POSTES D'ABONNES

(30) Priorität: 22.04.1999 DE 19918373
(43) Veröffentlichungstag der Anmeldung: 09.01.2002
(73) Patentinhaber: SIEMENS AKTIENGESELLSCHAFT, 80333 München (DE)
(72) Erfinder: RITTER, Gerhard, D-86943 Thaining (DE)
(86) Internationale Anmeldenummer: PCT/DE2000/001231
(87) Internationale Veröffentlichungsnummer: WO 2000/065752

(56) Entgegenhaltungen:
- EP-A- 0 526 833
- EP-A- 0 896 429
- US-A- 5 343 497
- US-A- 5 544 155

## Beschreibung

Die Erfindung betrifft ein Verfahren zur Frequenzsynchronisation von Teilnehmerstationen eines Funk-Kommunikationssystems und eine derartig ausgebildete Teilnehmerstation.

In Funk-Kommunikationssystemen werden Daten (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation, sind Frequenzen im Frequenzband von ca. 2000 MHz vorgesehen.

In Funk-Kommunikationssystemen sind nur sehr geringe Frequenzabweichungen zwischen Basisstation und Teilnehmerstation zulässig, um die Wahrscheinlichkeit von Detektionsfehlern gering zu halten. Während die Basisstation eine sehr hohe Frequenzgenauigkeit relativ einfach erreichen kann, sind für die Teilnehmerstationen aus Gründen der Kosten, der Größe und des Stromverbrauch Frequenzabweichungen unvermeidbar. Diese Frequenzabweichungen sollen durch eine Frequenzsynchronisation der Teilnehmerstationen auf die Basisstation auf einen ausreichend kleinen Restversatz reduziert werden.

Im GSM-Mobilfunksystem (GSM global system for mobile communication) ist eine Frequenzkorrektur durch Auswertung eines eigenen Funkblocks der Basisstation zur Bestimmung des Frequenzfehlers durch die Mobilstation bekannt. Nach J.Eberspächer, H.-J.Vogel, "GSM Global System for Mobile Communication", Teubner Verlag, 1997, S.83-84, entspricht dieser Funkblock einem unmodulierten Träger mit festem Abstand über der Trägerfrequenz. Der Meßbereich ist damit vorgeben und die Meßgenauigkeit kann nur durch eine entsprechend aufwendigere Auswerteschaltung in den Mobilstationen erhöht werden.

Aus der EP 0 526 833 A2 ist ein Detektor für Trägerfrequenzfehler bekannt, der anhand eines empfangenen Signals und eines intern generierten lokalen Einheitswortes ein Kreuzkorrelationssignal berechnet. Zu einem durch ein Rahmentaktsignal festgelegten Zeitpunkt wird die Phase des Kreuzkorrelationssignals ermittelt und für eine Frequenz-Feinkorrektur verwendet.

Der Erfindung liegt die Aufgabe zugrunde, ein Verfahren zur Frequenzsynchronisation von Teilnehmerstationen anzugeben, das die Ressourcen der Funkschnittstelle gut nutzt und eine genaue Frequenzsynchronisation ermöglicht. Diese Aufgabe wird durch das Verfahren mit den Merkmalen des Anspruchs 1 und die Teilnehmerstation mit den Merkmalen des Anspruchs 13 gelöst. Vorteilhafte Weiterbildungen der Erfindung sind den Unteransprüchen zu entnehmen.

Beim erfindungsgemäßen Verfahren zur Frequenzsynchronisation von Teilnehmerstationen eines Funk-Kommunikationssystems ist die Teilnehmerstation über eine Funkschnittstelle mit einer Basisstation verbunden. Die Teilnehmerstation empfängt zumindest zwei getrennte Meßsequenzen der Basisstation und wertet sie aus, wobei die Teilnehmerstation den zeitlichen Abstand der zwei Meßsequenzen kennt. Es wird eine Phasendifferenz zwischen den zwei Meßsequenzen bestimmt und aus der Phasendifferenz eine Frequenzabweichung ermittelt. Somit kann basierend auf der Frequenzabweichung eine Frequenznormale nachregelt werden.

Solche Meßsequenzen können kurz sein und auch sehr häufig gesendet werden, damit werden kaum funktechnische Ressourcen gebunden und für die Differenzbildung ergeben sich vielfältige Möglichkeiten, die zu einer schnellen und sehr genauen Frequenzsynchronisation führen.

Nach vorteilhaften Ausgestaltungen der Erfindung entsprechen die Meßsequenzen Mittambeln innerhalb von Funkblöcken bzw.

Pilotsignale zur Kanalschätzung vorgesehen sind. Alternativ werden die Meßsequenzen zusätzlich zu Mittambeln bzw. Pilotsignalen gesendet. Beides kann auch miteinander kombiniert werden. Mittambeln oder Pilotsignale werden für die Kanalschätzung regelmäßig gesendet und sind mit ihrer Signalform den Teilnehmerstationen bekannt. Eine Auswertung für die Frequenzsynchronisation bedeutet keinen zusätzlichen Ressourcenbedarf. Zusätzliche Meßsequenzen können die Frequenzsynchronisation durch eine größere Anzahl von Meßpunkten auch an den Stellen ergänzen oder ersetzen, an denen normalerweise keine Mittambeln bzw. Pilotsignale gesendet werden.

Nach weiteren vorteilhaften Ausgestaltungen der Erfindung werden die Phasendifferenz zwischen aufeinanderfolgenden Meßsequenzen oder nicht aufeinanderfolgenden Meßsequenzen bestimmt werden. Je größer der Abstand der Meßsequenzen, umso höher ist die Meßgenauigkeit für die Phasendifferenz. Je kleiner der Abstand, um so größer ist der Meßbereich.

Für die Frequenzsynchronisätion einer Teilnehmerstation ist es daher von Vorteil, wenn zuerst eine Messung mit großem Meßbereich und anschließend in einem weiteren Schritt eine Messung mit hoher Meßgenauigkeit durchgeführt wird. Ein iteratives Verfahren findet eindeutig und mit hoher Genauigkeit des richtige Frequenz. Während des Betriebs der Teilnehmerstation kann die Fequenzsynchronisation vorteilhafterweise zyklisch wiederholt werden.

Die Anordnung der Meßsequenzen in den Signalen der Basisstation kann den Erfordernissen an Meßbereich und -genauigkeit angepaßt werden. Vorteilhafte Möglichkeiten sind:
für eine funkblockartige Übertragung sind die Meßsequenzen zu Beginn und Ende des Funkblocks angeordnet,
für eine kontinuierliche Übertragung sind die Meßsequenzen zu Beginn und Ende eines datentragenden Abschnitts angeordnet.

Bei Mobilfunkanwendung muß mit einer Mehrwegeausbreitung der Signale gerechnet werden. Somit sind im Empfangssignal bei der Teilnehmerstation zu Beginn des Empfangs der Meßsequenzen noch Einflüsse vorangegangener Signalanteile wirksam und überlagern die Meßsequenz. Um die Meßgenauigkeit zu erhöhen ist es vorteilhaft, daß der Beginn der Meßsequenzen für die Phasendifferenzbestimmung nicht berücksichtigt wird, sondern erst die Teile der Meßsequenzen, die nach Ablauf einer Umweglaufzeit eintreffen.

Nach einer weiteren Ausbildung der Erfindung werden die bestimmten Phasendifferenzen vor der Ermittelung der Frequenzabweichung gemittelt. Bei der Bestimmung des Mittelwertes und der Varianz der Differenzen erhält man zusätzlich ein Maß für die Zuverlässigkeit der Meßwerte.

Das erfindungsgemäße Verfahren kann vorteilhafterweise in Funk-Kommunikationssystemen mit CDMA-Teilnehmerseparierung (CDMA code division multiple access) sowohl im FDD- als auch im TDD-Modus (FDD frequency division duplex, TDD time division duplex) eingesetzt werden. Ein Einsatz in einem Funk-Kommunikationssystem mit einer Funkschnittstelle nach einem TDD-Übertragungsverfahren mit einer TD-CDMA-Teilnehmerseparierung (TD-CDMA time division CDMA) und ggf. richtungsselektivem Abstrahlungsdiagramm der Antennen ist besonders vorteilhaft. Um die Vorteile der flexiblen Kapazitätserhöhung (soft capacity) durch Zuweisung zusätzlicher Kodes oder eine Veränderung des Spreizfaktors zu nutzen, sind die Frequenzbänder breitbandig und die Datenanteile sind mit einem teilnehmer- bzw. kanalindividuellen Spreizkode gespreizt.

Ausführungsbeispiele der Erfindung werden anhand der beiliegenden Zeichnungen näher erläutert.

Dabei zeigen
- Fig 1: ein Blockschaltbild eines Mobilfunknetzes,
- Fig 2: eine schematische Darstellung der Kanalstruktur des TDD- und FDD-Übertragungsverfahrens,
- Fig 3: eine Phasendifferenzmessung anhand der Abwärtsrichtung des TDD-Übertragungsverfahrens,
- Fig 4: Meßsequenzen bei einer funkblockartigen Übertragung,
- Fig 5: Meßsequenzen bei einer kontinuierlichen Übertragung, und
- Fig 6: ein Blockschaltbild einer Teilnehmerstation.

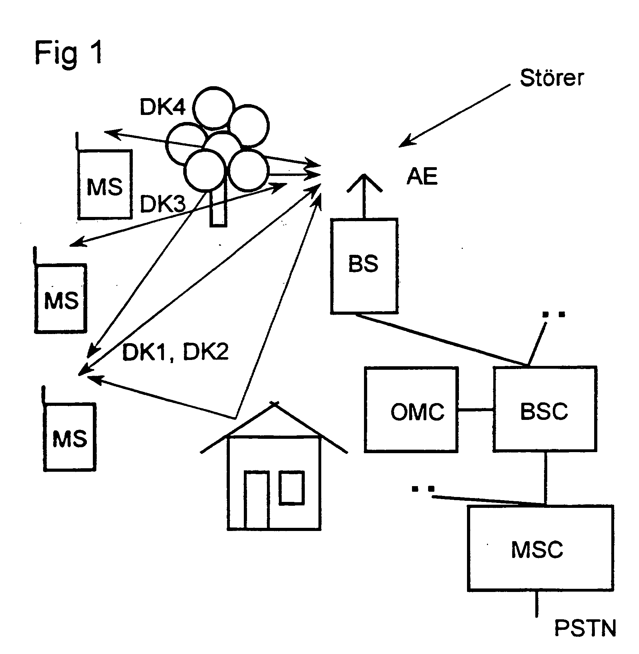

Das in Fig 1 dargestellte Funk-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Funkverbindung zu Teilnehmerstationen, z.B. Mobilstationen MS, aufbauen kann.

In Fig 1 sind beispielhaft drei Funkverbindungen zur übertragung von Nutzinformationen und Signalisierungsinformationen zwischen drei Mobilstationen MS und einer Basisstation BS dargestellt, wobei einer Mobilstation MS zwei Datenkanäle DK1 und DK2 und den anderen Mobilstationen MS jeweils ein Datenkanal DK3 bzw. DK4 zugeteilt sind. Jeder Datenkanal DK1..DK4 repräsentiert ein Teilnehmersignal.

Ein Operations- und Wartungszentrum OMC realisiert Kontrollund Wartungsfunktionen für das Mobilfunknetz bzw. für Teile davon. Die Funktionalität dieser Struktur wird vom Funk-Kommunikationssystem nach der Erfindung genutzt; sie ist jedoch auch auf andere Funk-Kommunikationssysteme übertragbar, in denen die Erfindung zum Einsatz kommen kann.

Ein übertragungskanal wird durch Chipfolge, dem Spreizkode charakterisiert. Ein bestimmter Spreizkode wird für einen Übertragungskanal verwendet und ist damit kanalindividuell. Ein Übertragungskanal wird weiterhin durch eine Trägerfrequenz und bei TDD-Modus zusätzlich durch einen Zeitschlitz bezeichnet. Es wird angenommen, daß ein erster Teil der Mobilstationen MS Sprachinformationen überträgt und ein zweiter Teil der Mobilstationen MS Paketdaten überträgt.

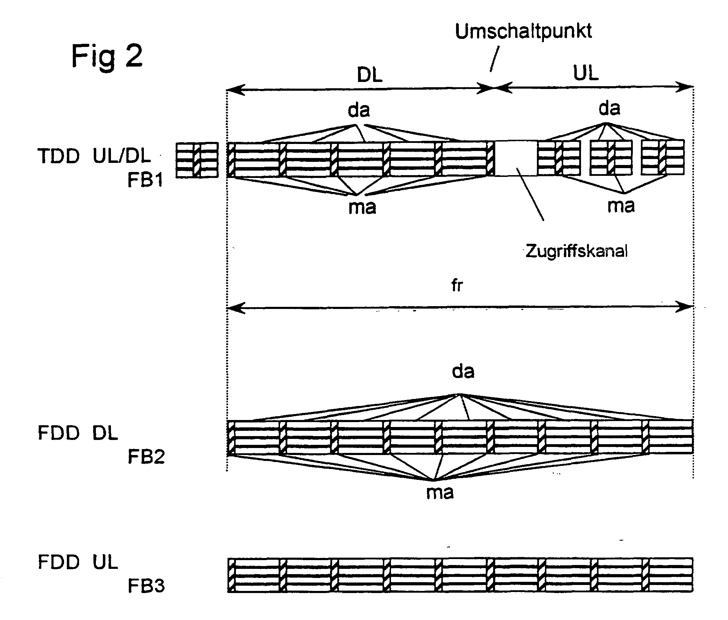

Fig 2 zeigt die Funkschnittstelle zwischen Basisstation BS und Mobilstation MS in beiden Übertragungsverfahren. Die Übertragung in den unterschiedlichen Frequenzbänder FB1, FB2, FB3 ist untereinander synchronisiert. Dabei werden breitbandige Frequenzbänder mit z.B. B = 1,6 oder 5 MHz genutzt.

Für beide Ubertragungsverfahren und beide Ubertragungsrichtungen werden die Signale mehrerer Teilnehmerstationen MS gleichzeitig in einem Frequenzband FB1, FB2, FB3 übertragen, wobei eine Unterscheidung anhand von individuellen Spreizkodes erfolgt. Es wird folglich ein CDMA (code division multiple access) Teilnehmerseparierungsverfahren eingesetzt, das einfache Anpassung der Datenrate einer Verbindung zwischen Basisstation BS und Teilnehmerstation MS durch Zuordnung eines oder mehrerer Spreizkodes oder Änderung des Spreizfaktors ermöglicht.

Beim TDD-Ubertragungsverfahren folgt dem Umschaltpunkt ein Zeitintervall, der von den Teilnehmerstationen MS willkürlich als Zugriffskanal für eine Anfordung einer Ressourcenzuteilung genutzt wird. Im Aufwärtsrichtung UL kommt eine burstartige Übertragung in Zeitschlitzen zum Einsatz, wobei ein von einer Teilnehmerstation MS gesendeter Funkblock jeweils eine Kanalmeßsequenz (Mittambel) ma inmitten zweier Datenanteile da umfaßt. Zwischen den Funkblöcken sind Übertragungspausen als Schutzabstände zur besseren Trennbarkeit der empfangenen Signale vorgesehen. In Abwärtsrichtung DL liegt eine kontinuierliche Übertragung vor.

Beim FDD-Übertragungsverfahren sind Auf- und Abwärtsrichtung UL, DL gleichartig und entsprechend der Abwärtsrichtung DL des TDD-Ubertragungsverfahrens strukturiert. Während einer kontinuierlichen Übertragung wechseln sich zyklisch Kanalmeßsequenzen (Pilotsignale) ma und Datenanteile da ab.

Das erfindungsgemäße Verfahren kann sowohl im FDD- als auch im TDD-Modus eingesetzt werden. Voraussetzung für die Frequenzsynchronisation ist die Messung der Phasendifferenz von zwei Meßsequenzen, deren zeitlicher Abstand in der Teilnehmerstation MS bekannt ist. Aus *Δf* = ^{*Δϕ*}/_{Δ*t*} läßt sich eine Fre-quenzabweichung ermitteln, die zur Nachregelung einer Frequenznormalen der Teilnehmerstation MS dient.

Für den Meßbereich und die Meßgenauigkeit sind jedoch die Abstände dt (entspricht Δ*t* in obiger Formel) zwischen den Meßsequenzen zu beachten. Beim GSM-Mobilfunksystem beträgt der Abstand der Mittambeln als Kanalmeßsequenzen-ca. 577 µs. Der Meßbereich für die Frequenzabweichung beträgt somit ca. ±877 Hz. Dies entspricht bei einer Trägerfrequenz von ca. 900 MHz einem zulässigen Frequenzfehler von etwa ±10⁻⁶. Bei größeren Abweichung treten Mehrdeutigkeiten auf.

Auch bei anderen Funk-Kommunikationssystemen beträgt der Abstand der Kanalmeßsequenzen üblicherweise zwischen 400 und 700 µs (z.B. bei UMTS 625 µs). Bei 625 µs ergibt sich ein Meßbereich von ca. ±800 Hz. Für eine Trägerfrequenz von ca. 2 GHz ergibt sich ein zulässiger Frequenzfehler von etwa ±0,4*10⁻⁶ für eine eindeutige Messung.

Durch das häufige Aussenden der Kanalmeßsequenzen sind pro Sekunde sehr viele Messungen möglich.-Damit läßt sich eine entsprechend hohe Meßgenauigkeit erzielen. Für eine Teilnehmerstation MS ist es für eine Anfangssynchronisation im Sinne einer Iteration vorteilhaft, zuerst aufeinanderfolgende Meßsequenzen auszuwerten, um einen großen Meßbereich mit eindeutiger Messung zu erreichen, und dann nicht aufeinanderfolgende Meßsequenzen auszuwerten, um innerhalb kleinerer Meßbereiche eine höhere Meßgenauigkeit zu erzielen. Bei einer später zyklisch wiederholten Synchronisation kann sofort mit einem kleineren Meßbereich begonnen werden.

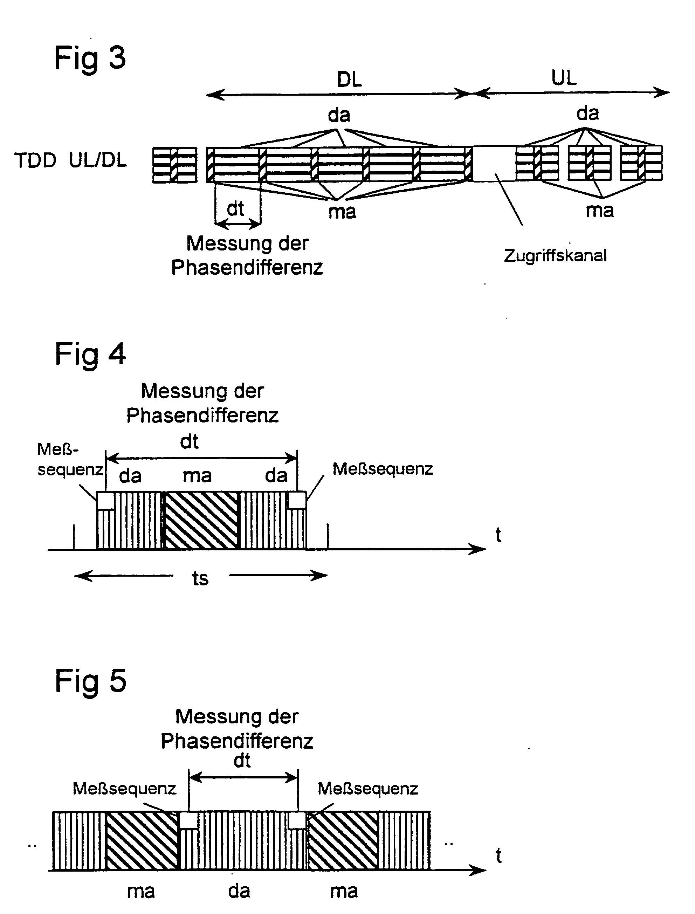

Für die Bestimmung der Phasendifferenz aus zwei Meßsequenzen wurden bisher die Meßsequenzen mit den Kanalmeßsequenzen (Mittambeln oder Pilotsignalen) gleichgesetzt. Es ist jedoch auch möglich, eigene Phasenmeßsequenzen allein oder in Kombination mit Kanalmeßsequenzen einzusetzen. Die Fig 4 und 5 zeigen dafür Beispiele.

Dies kann z.B. dann vorteilhaft sein, wenn ein größerer Meßbereich für die Frequenzabweichung gebracht wird. Hierzu werden in einem Kanal Meßsequenzen zur Phasendiffernzmessung eingefügt. In Fig 4 ist ein Funkblock gezeigt, der in zwei datentragende Teile da eine eingebettet Mittambel ma zeigt. Zu Beginn und Ende des Funkblock sind zusätzliche Meßsequenzen angeordnet. Die Position und Anzahl der Meßsequenzen, kann auch davon abweichen, abhängig von den Erfordernissen für Meßbereich und Auflösung.

Für die Messung der Phasendifferenz werden nach Fig 3 allein die eingefügten Meßsequenzen verwendet. Eine weitere Ausgestaltung sieht vor, daß für die Messung der Phasendifferenz Teilsequenzen der Kanalmeßsequenzen benutzt werden. Auch die Messung der Phasendifferenz zwischen Kanalmeßsequenzen und zusätzlichen Meßsequenzen ist möglich.

In Fig 4 ist das Einbringen der Meßsequenzen in Signale einer kontinuierlichen Übertragung gezeigt. Zwischen den Kanalmeßsequenzen ma ist ein datentragender Abschnitt da ohne Sendepause angeordnet, wobei die zusätzlichen Meßsequenzen zu Beginn und Ende dieses daten tragenden Abschnitts da angeordnet sind.

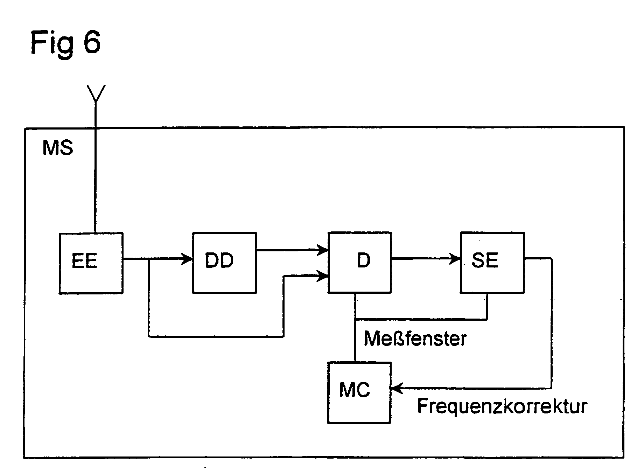

In einer Teilnehmerstation MS nach Fig 6 werden Empfangssignale über eine Antenne empfangen und in einer Empfangseinrichtung verstärkt, ins Basisband übertragen und digitalisiert. Das digitalisierte Basisbandsignal mit seinen Quadraturkomponenten wird zum einen direkt und zum anderen, um den zeitlichen Abstand dt der Meßsequenzen verzögert, über ein Verzögerungsglied DD auf einen Differenzbildner D geführt.

Es werden in dem Differenzbildner D die komplexen Differenzen der beiden Signale gebildet, wobei innerhalb der Meßsequenzen erst dann die Differenz bestimmt wird, wenn der Einfluß der' Mehrwegeausbreitung abgeklungen ist. Diese Phasendifferenz wird in einer Steuereinrichtung SE nachbearbeitet und mit Hilfe eines Tiefpasses geglättet.

Aus dem durch die Glättung ermittelten Mittelwert für die Phasendifferenz wird über eine Tabelle eine Frequenzabweichung bestimmt und entsprechend einer Abstimmsteilheit eine Nachsteuerspannung für einen Takt- und Frequenzgeber MC bestimmt. Damit wird die Frequenznormale des Takt- und Frequenzgeber MC nachgeregelt. Der des Takt- und Frequenzgeber MC entspricht einer Regeleinrichtung. Statt dem Differenzbildner D in Form einer Subtraktionsschaltung D kann auch eine Anordnung zur direkten Bestimmung der Phasendifferenzen eingesetzt werden.

## Patentansprüche

1. Verfahren zur Frequenzsynchronisation von Teilnehmerstationen (MS) eines Funk-Kommunikationssystems, bei dem eine Teilnehmerstation (MS)
- über eine Funkschnittstelle mit einer Basisstation (BS) verbunden ist,
- zumindest zwei getrennte Meßsequenzen der Basisstation (BS) empfängt und auswertet, wobei die Teilnehmerstation (MS) den zeitlichen Abstand der zwei Meßsequenzen kennt,
- eine Phasendifferenz zwischen den zwei Meßsequenzen bestimmt,
- aus der Phasendifferenz eine Frequenzabweichung ermittelt,
- basierend auf der Frequenzabweichung eine Frequenznormale nachregelt.

2. Verfahren nach Anspruch 1, bei dem
die Meßsequenzen Mittambeln oder Teile von Mittambeln innerhalb Funkblöcken entsprechen, wobei die Mittambeln zur Kanalschätzung vorgesehen sind.

3. Verfahren nach einem der vorherigen Ansprüche, bei dem
die Meßsequenzen zusätzlich zu Mittambeln gesendet werden.

4. Verfahren nach einem der vorherigen Ansprüche, bei dem
die Phasendifferenz zwischen aufeinanderfolgenden Meßsequenzen bestimmt werden.

5. Verfahren nach einem der Ansprüche 1 bis 3, bei dem
die Phasendifferenz zwischen nicht aufeinanderfolgenden Meßsequenzen bestimmt werden.

6. Verfahren nach den Ansprüchen 4 und 5, bei dem
für eine Frequenzsynchronisation zuerst das Verfahren nach Anspruch 4 und darauf das Verfahren nach Anspruch 5 durchgeführt wird.

7. Verfahren nach einem der vorherigen Ansprüche, bei dem
für eine funkblockartige Übertragung die Meßsequenzen zu Beginn und Ende des Funkblocks angeordnet sind.

8. Verfahren nach einem der Ansprüche 1 bis 6, bei dem
für eine kontinuierliche Übertragung die Meßsequenzen zu Beginn und Ende eines datentragenden Abschnitts angeordnet sind.

9. Verfahren nach einem der vorherigen Ansprüche, bei dem
der Beginn der Meßsequenzen für die Phasendifferenzbestimmung nicht berücksichtigt wird, sondern erst die Teile der Meßsequenzen, die nach Ablauf einer Umweglaufzeit eintreffen.

10. Verfahren nach einem der vorherigen Ansprüche, bei dem
die bestimmten Phasendifferenzen vor der Ermittelung der Frequenzabweichung gemittelt werden.

11. Verfahren nach einem der vorherigen Ansprüche, bei dem
die Frequenzsynchronisation nach einem iterativen Verfahren erfolgt.

12. Verfahren nach einem der vorherigen Ansprüche, bei dem
die Funkschnittstelle nach einem TDD-Übertragungsverfahren mit TD-CDMA-Teilnehmerseparierung organisiert ist.

13. Teilnehmerstation (MS)
mit einer Empfangseinrichtung (EE) zum Empfangen von Signalen einer Basisstation (BS) über eine Funkschnittstelle,
mit einem Differenzbildner (D) zum Auswerten von zwei getrennten, in den Signalen der Basisstation (BS) übertragenen Meßsequenzen, und zum Ermitteln einer Phasendifferenz zwischen den zwei Meßsequenzen,
mit einer Steuereinrichtung (SE) zum Ermitteln einer Frequenzabweichung aus der Phasendifferenz unter Kenntnis des zeitlichen Abstands der zwei Meßsequenzen, und
mit einer Regeleinrichtung zum Nachregeln einer Frequenznormalen basierend auf der Frequenzabweichung.

## Claims

1. Method for synchronizing the frequencies of subscriber stations (MS) of a radio communication system, in which a subscriber station (MS)
- is connected to a base station (BS) via a radio interface,
- receives and evaluates at least two separate measuring sequences of the base station (BS), the time interval between the two measuring sequences being known to the subscriber station (MS),
- determines a phase difference between the two measuring sequences,
- determines a frequency deviation from the phase difference,
- corrects a frequency standard on the basis of the frequency deviation.

2. Method according to Claim 1, in which the measuring sequences correspond to midambles or parts of midambles within radio bursts, the midambles being provided for channel estimation.

3. Method according to one of the preceding claims, in which the measuring sequences are transmitted in addition to midambles.

4. Method according to one of the preceding claims, in which the phase difference is determined between successive measuring sequences.

5. Method according to one of Claims 1 to 3, in which the phase difference is determined between non-successive measuring sequences.

6. Method according to Claims 4 and 5, in which first the method according to Claim 4 and then the method according to Claim 5 are carried out for synchronization of frequencies.

7. Method according to one of the preceding claims, in which the measuring sequences are arranged at the beginning and end of the radio burst for burst transmission.

8. Method according to one of Claims 1 to 6, in which the measuring sequences are arranged at the beginning and end of a data-carrying section for continuous transmission.

9. Method according to one of the preceding claims, in which the beginning of the measuring sequences is not taken into consideration for determining the phase difference, but only the parts of the measuring sequences arriving after an indirect path delay has elapsed.

10. Method according to one of the preceding claims, in which the phase differences determined are averaged before the frequency deviation is determined.

11. Method according to one of the preceding claims, in which the frequencies are synchronized using an iterative method.

12. Method according to one of the preceding claims, in which the radio interface is organized in accordance with a TDD transmission method with TD-CDMA subscriber separation.

13. Subscriber station (MS)
with a receiving device (EE) for receiving signals from a base station (BS) via a radio interface,
with a differentiator (D) for evaluating two separate measuring sequences transmitted in the signals of the base station (BS) and for determining a phase difference between the two measuring sequences,
with a control device (SE) for determining a frequency deviation from the phase difference, with knowledge of the time interval between the two measuring sequences, and with a closed-loop control device for correcting a frequency standard on the basis of the frequency deviation.

## Revendications

1. Procédé pour la synchronisation de fréquence de stations d'abonnés (MS) d'un système de radiocommunication,
dans lequel une station d'abonné (MS)
- est raccordée à une station de base (BS) par l'intermédiaire d'une interface radio,
- reçoit et évalue au moins deux séquences de mesure séparées de la station de base (BS), la station d'abonné (MS) connaissant l'écart de temps entre les deux séquences de mesure,
- détermine une différence de phase entre les deux séquences de mesure,
- détermine une déviation de fréquence à partir de la différence de phase,
- règle un étalon de fréquence sur la base de la déviation de fréquence.

2. Procédé selon la revendication 1, dans lequel
les séquences de mesure correspondent à des mi-ambules ou à des fractions de mi-ambules à l'intérieur de blocs radio, les mi-ambules étant prévus pour l'évaluation du canal.

3. Procédé selon l'une quelconque des revendications précédentes, dans lequel
les séquences de mesure sont émises en plus des mi-ambules.

4. Procédé selon l'une quelconque des revendications précédentes, dans lequel
la différence de phase entre des séquences de mesures successives est déterminée.

5. Procédé selon l'une quelconque des revendications 1 à 3, dans lequel la différence de phase entre des séquences de mesure non successives est déterminée.

6. Procédé selon les revendications 4 et 5, dans lequel
le procédé selon la revendication 4 est d'abord exécuté pour une synchronisation de fréquence et ensuite le procédé selon la revendication 5.

7. Procédé selon l'une quelconque des revendications précédentes, dans lequel
les séquences de mesure sont placées au début et à la fin du bloc radio pour une transmission par blocs radio.

8. Procédé selon l'une quelconque des revendications 1 à 6, dans lequel
les séquences de mesure sont placées au début et à la fin d'une section portant des données pour une transmission continue.

9. Procédé selon l'une quelconque des revendications précédentes, dans lequel
le début des séquences de mesure n'est pas pris en compte pour déterminer la différence de phase mais seulement les parties des séquences de mesure qui arrivent après l'expiration d'un temps de réacheminement.

10. Procédé selon l'une quelconque des revendications précédentes, dans lequel
une moyenne des différences de phase déterminées est réalisée avant la détermination de la déviation de fréquence.

11. Procédé selon l'une quelconque des revendications précédentes, dans lequel
la synchronisation de fréquence est réalisée selon un procédé itératif.

12. Procédé selon l'une quelconque des revendications précédentes, dans lequel
l'interface radio est organisée selon un procédé de transmission TDD avec séparation d'abonnés TD CDMA.

13. Station d'abonné (MS)
comprenant un dispositif de réception (EE) pour la réception de signaux d'une station de base (BS) par l'intermédiaire d'une interface radio,
comprenant un différenciateur (D) pour évaluer deux séquences de mesure séparées, transmises dans les signaux de la station de base (BS), et pour déterminer une différence de phase entre les deux séquences de mesure, comprenant un dispositif de commande (SE) pour déterminer une déviation de fréquence à partir de la différence de phase, en connaissant l'écart de temps entre les deux séquences de mesure, et
comprenant un dispositif de réglage pour régler un étalon de fréquence sur la base de la déviation de fréquence.
